# Europäisches Patentamt

# European Patent Office

# Office européen des brevets

(19)

(11) Veröffentlichungsnummer: **0 180 749**

**B1**

(12) # EUROPÄISCHE PATENTSCHRIFT

(45) Veröffentlichungstag der Patentschrift:
**08.06.88**

(21) Anmeldenummer: **85112040.2**

(22) Anmeldetag: **23.09.85**

(51) Int. Cl.⁴: **C 08 G 18/66,** B 29 C 33/62,
C 08 J 9/00, C 08 K 5/10

(54) **Verfahren zur Herstellung von Formkörpern.**

(30) Priorität: **03.10.84 DE 3436163**

(43) Veröffentlichungstag der Anmeldung:
**14.05.86 Patentblatt 86/20**

(45) Bekanntmachung des Hinweises auf die Patenterteilung:
**08.06.88 Patentblatt 88/23**

(84) Benannte Vertragsstaaten:
**BE DE FR GB IT NL SE**

(56) Entgegenhaltungen:
**US-A-3 037 947**
**US-A-3 356 621**
**US-A-4 254 228**

**Die Akte enthält technische Angaben, die nach
dem Eingang der Anmeldung eingereicht wurden
und die nicht in dieser Patentschrift enthalten sind.**

(73) Patentinhaber: **BAYER AG, Konzernverwaltung RP
Patentabteilung, D-5090 Leverkusen 1 Bayerwerk
(DE)**

(72) Erfinder: **Weber, Christian, Dr., Paul- Klee- Strasse
68A, D-5090 Leverkusen (DE)**
Erfinder: **König, Klaus, Dr., Heymannstrasse 50,
D-5090 Leverkusen (DE)**
Erfinder: **Schmidt, Manfred, Dr., Zeisigstrasse 5,
D-4047 Dormagen (DE)**

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

EP 0 180 749 B1

## Beschreibung

Die Erfindung betrifft ein neues Verfahren zur Herstellung von gegebenenfalls mikrozellularen, elastomeren Polyurethan-Formkörpern mit geschlossener Oberflächenschicht einer mittleren Dichte von 0,8 bis 1,4 g/cm³, wobei bestimmte Kondensationsprodukte der Rizinolsäure als innere Formtrennmittel mitverwendet werden.

Die Herstellung von Formkörpern auf Polyurethanbasis mit selbsttrennenden Eigenschaften unter Mitverwendung von sogenannten inneren Trennmitteln ist bereits bekannt (vgl. z. B. US-A-3 726 952, US-A-4 033 912, US-A-4 024 090, US-A-4 058 492, US-A 4-098 731, DE-A-2 121 670, DE-A-2 427 273 oder DE-A-3 012 126).

Die in diesen Vorveröffentlichungen beschriebenen Trennmittel eignen sich insbesondere gut zur Herstellung von harten Formschaumstoffen auf Polyurethanbasis mit einer geschlossenen Außenhaut, d.h. sie verleihen diesen Formkörpern gute bis sehr gute selbsttrennende Eigenschaften.

Diese Aussage gilt jedoch nicht uneingeschränkt für die Herstellung von mikrozellularen, elastomeren Formkörpern auf Polyurethanbasis einer hohen Dichte. Derartige Formkörper werden im allgemeinen nach der Reaktionsspritzgußtechnik unter Verwendung von hochaktive Katalysatoren enthaltenden Reaktionsgemischen aus organischen Polyisocyanaten, höhermolekularen Polyhydroxylverbindungen und Kettenverlängerungsmitteln hergestellt (vgl. z. B. DE-B-2 622 951). Bei der Herstellung derartiger spezieller, elastomerer Formkörper stellt sich nach wie vor das ungelöste Problem, wie den Formkörpern zufriedenstellende selbsttrennende Eigenschaften verliehen werden könnten.

Es war somit die der Erfindung zugrundeliegende Aufgabe, solche speziellen inneren Trennmittel aufzufinden, die auch zur Herstellung von gegebenenfalls mikrozellularen, elastomeren Formkörpern mit selbsttrennenden Eigenschaften der nachstehend näher beschriebenen Art in Serienproduktion geeignet sind.

Diese Aufgabe konnte mit dem nachstehend beschriebenen erfindungsgemäßen Verfahren gelöst werden, bei welchem bestimmte Kondensationsprodukte der Rizinolsäure mit ein- und/oder mehrwertigen Alkoholen, vorzugsweise mit gegebenenfalls Ethergruppen aufweisenden Alkandiolen, als innere Trennmittel eingesetzt werden.

Die besonders gute Eignung der nachstehend näher beschriebenen erfindungswesentlichen Trennmittel für das erfindungsgemäße Verfahren ist auch im Hinblick auf den nächstliegenden Stand der Technik, wie er sich aus DE-A-2 121 670 ( = GB-A-1 365 215) bzw. aus DE-A-2 404 310 ( = US-A-4 058 492) ergibt, überraschend.

In der DE-A-2 121 670 werden bestimmte binäre oder ternäre Gemische als Trennmittel bei der Herstellung von vorzugsweise harten Formschaumstoffen beschrieben, wobei als Trennmittelkomponente in den besagten Gemischen u.a. auch Hydroxylgruppen aufweisende Ester von Monocarbonsäuren zum Einsatz gelangen können. Als Aufbaukomponenten für diese Ester werden einerseits insbesondere langkettige Fett- und Ölsauren und andererseits die unterschiedlichsten Alkohole, u.a. auch einfache Alkandiole wie Ethylenglykol oder Hexandiolgenannt. In der langen Aufzählung der geeigneten Fett- bzw. Ölsäuren findet sich auch Rizinolsäure. Die erfindungsgemäße Lösung der genannten erfindungsgemäßen Aufgabe muß jedoch auch im Hinblick auf diese Offenbarung als überraschend angesehen werden, da (i) die Herstellung der speziellen erfindungsgemäßen, elastomeren Formkörper einer hohen Dichte in dieser Vorveröffentlichung nicht angesprochen wird, da (ii) die genannten Ester nur als Einzelkomponente in binären bzw. ternären Trennmittelsystemen eingesetzt werden sollen, und da (iii) im Falle der Rizinolsäure ausdrücklich darauf hingewiesen wird, daß die Mitverwendung eines Alkohols bei der Herstellung des Estergruppen aufweisenden Kondensationsprodukts nicht erforderlich ist, so daß der Leser der Vorveröffentlichung nicht auf den Gedanken kommen kann, aus der Fülle der in dieser Vorveröffentlichung beschriebenen Trennmittel bzw. Trennmittelkomponenten Kondensationsprodukte der Rizinolsäure mit Alkoholen der nachstehend näher beschriebenen Art auszuwählen, um diese als Trennmittel bei der Herstellung von ganz speziellen, elastomeren Formkörpern einer hohen Dichte einzusetzen.

Die DE-A-2 404 310 empfiehlt die Verwendung von freie Carboxylgruppen aufweisenden Umsetzungsprodukten der Rizinolsäure mit langkettigen Fettsäuren, u.a. von freie Carboxylgruppen aufweisenden Polyrizinolsäuren, wie sie durch Selbstkondensation von Rizinolsäure erhalten werden können, als innere Trennmittel bei der Herstellung von Formschaumstoffen der unterschiedlichsten Art. Diese Carboxylgruppen aufweisenden Trennmittel sind jedoch für hochaktive Systeme wie sie nach der Reaktionsspritzgußtechnik verarbeitet und zur Herstellung von elastomeren Formteilen einer hohen Dichte verwendet werden, nur bedingt geeignet, da sie die empfindliche Katalyse dieser Systeme stören. So können zwar mit den Trennmitteln dieser Vorveröffentlichung auch elastische Formschaumstoffe einer hohen Dichte mit guten selbsttrennenden Eigenschaften hergestellt werden, jedoch zeigt sich der Nachteil der Trennmittel in dem Umstand, daß bei der Serieproduktion derartiger Formkörper die Formeninnenwände in kurzen zeitlichen Abständen gereinigt werden müssen, da andernfalls die selbsttrennenden Eigenschaften schon nach wenigen Reaktionszyklen verschwinden.

Dies liegt offensichtlich daran, daß die Formkörper an der Oberfläche innerhalb der erforderlichen kurzen Reaktionszeiten nicht vollständig ausreagieren, so daß sich an der Forminnenwand bereits nach wenigen Reaktionszyklen Verunreinigungen bilden, die die Trennwirkung der an sich guten Trennmittel alsbald aufheben.

Gegenstand der Erfindung ist somit ein Verfahren zur Herstellung von gegebenenfalls mikrozellularen elastomeren Formkörpern einer mittleren Dichte von 0,8 bis 1,4 g/cm$^3$ und einer geschlossenen Oberflächenschicht mit selbsttrennenden Eigenschaften durch Umsetzung in geschlossenen Formen eines mittels der Reaktionsspritzgußtechnik hergestellten Reaktionsgemisches aus
a) organischen Polyisocyanaten und
b) Lösungen von
b1) Kettenverlängerungsmitteln, ausgewählt aus der Gruppe bestehend aus (i) gegebenenfalls Ethergruppen aufweisenden Alkandiolen des Molekulargewichtsbereichs 62 bis 400, (ii) aromatischen Diaminen des Molekulargewichtsbereichs 108 bis 400 und (iii) beliebigen Gemischen der unter (i) und (ii) genannten Verbindungen, in
b2) Polyhydroxylverbindungen eines mittleren Molekulargewichts von 1800 bis 12000 und einer mittleren Hydroxylfunktionalität von 2 bis 3, wobei als Komponente b2) auch Gemische verschiedener Polyhydroxylverbindungen zum Einsatz gelangen können, in denen einzelne Komponenten ein unter 1800, jedoch über 400 liegendes Molekulargewicht und/oder eine über 3 liegende Hydroxylfunktionalität aufweisen können,
wobei die Menge der Komponente b1) 5 bis 50 Gew.-%, bezogen auf die Menge der Komponente b2), beträgt, unter Mitverwendung von
c) Katalysatoren für die Isocyanat-Polyadditionsreaktion,
d) inneren Formtrennmitteln und gegebenenfalls
e) weiteren Hilfs- und Zusatzstoffen,
dadurch gekennzeichnet, daß man als innere Trennmittel d) Estergruppen aufweisende Kondensationsprodukte eines osmometrisch bestimmbaren mittleren Molekulargewichts von 900 bis 4500, einer Säurezahl von unter 5 und einer Hydroxylzahl von 12,5 bis 125 aus 3 bis 15 Mol Rizinolsäure und einem Mol eines ein- oder mehrwertigen Alkohols des Molekulargewichtsbereichs 32 bis 400 oder insgesamt einem Mol eines Gemischs mehrerer derartiger Alkohole, in einer Menge von 0,3 bis 30 Gew.-% der Kondensationsprodukte, bezogen auf die Gesamtmenge des Reaktionsgemisches, verwendet.

Ausgangsmaterialien a) für das erfindungsgemäße Verfahren sind beliebige organische Polyisocyanate, wie sie beispielsweise in der DE-B-2 404 310, Kolonne 3, Zeile 39 bis Kolonne 4, Zeile 56 beispielhaft offenbart sind. Bevorzugt werden beim erfindungsgemäßen Verfahren organische Polyisocyanate mit ausschließlich aromatisch gebundenen Isocyanatgruppen einer (mittleren) NCO-Funktionalität von 2 bis 2,3 eingesetzt. Zu den besonders bevorzugten Polyisocyanaten gehören bei Raumtemperatur flüssige Polyisocyanate bzw. Polyisocyanatgemische der Diphenylmethan-Reihe, d.h. bei Raumtemperatur flüssige Gemische von 4,4'-Diisocyanatodiphenylmethan mit 2,4'-Diisocyanatodiphenylmethan und gegebenenfalls höherfunktionellen Homologen dieser Diisocyanate, bei Raumtemperatur flüssige, Carbodiimid- bzw. Uretonimin-modifizierte Derivate dieser Diisocyanate bzw. Polyisocyanatgemische, bei Raumtemperatur flüssige Urethan-modifizierte Derivate dieser Diisocyanate bzw. Polyisocyanatgemische, insbesondere solche der in DE-A-2 624 526 beschriebenen Art, und bei Raumtemperatur flüssige Umsetzungsprodukte von 1 Mol 4,4-Diisocyanatodiphenylmethan mit 0,05 bis 0,3 Mol eines oder mehrerer niedermolekularer Diole oder Triole, vorzugsweise Polypropylenglykole mit einem Molekulargewicht bis zu 700, wie sie beispielsweise gemäß DE-A-1 618 380 zugänglich sind.

Bei der Komponente b1) handelt es sich um Kettenverlängerungsmittel der an sich bekannten Art, d.h. um (i) gegebenenfalls Ethergruppen aufweisende Alkandiole eines Molekulargewichts von 62 bis 400, (ii) aromatische Diamine des Molekulargewichts 108 bis 400 bzw. um (iii) beliebige Gemische derartiger Kettenverlängerungsmittel.

Gut geeignete Kettenverlängerungsmittel (i) sind beispielsweise Ethylenglykol, 1,2-Dihydroxypropan, 1,3-Dihydroxypropan, 1,4-Dihydroxybutan, 1,6-Dihydroxyhexan, 1,8-Dihydroxyoctan, Neopentylglykol, Diethylenglykol, Triethylenglykol, Tetraethylenglykol, Dipropylenglykol, Tripropylenglykol, Dibutylenglykol, Tripropylenglykol oder beliebige Gemische derartiger Diole.

Geeignete Kettenverlängerungsmittel (ii) sind beliebige, vorzugswese primäre Aminogruppen aufweisende aromatische Diamine des Molekulargewichtsbereichs 108 bis 400, d.h. Diamine, die ausschließlich aromatisch gebundene, vorzugsweise primäre Aminogruppen aufweisen. Beispiele derartiger Diamine sind 1,4-Diaminobenzol, 2,4-Diaminotoluol, 2,4'- und/oder 4,4'-Diaminodiphenylmethan, 3,3'-Dimethyl-4,4'-diamino-diphenylmethan oder 4,4'-Diaminodiphenyl-propan-(2,2), bzw. beliebige Gemische derartiger Diamine.

Bei den bevorzugten, beim erfindungsgemäßen Verfahren einzusetzenden, Diaminen handelt es sich jedoch um solche, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 4, vorzugsweise 1 bis 3 Kohlenstoffatomen, aufweisen, besonders bevorzugt um solche, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele für bevorzugte bzw. besonders bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 1,3-Dimethyl-5-tert.-butyl-4,6-diamino-benzol oder 1,3-Dimethyl-5-tert.-butyl-2,6-diamino-benzol oder beliebige Gemische derartiger Diamine. Besonders bevorzugt sind 1-Methyl-3,5-diethyl-2,4-diaminobenzol und dessen technische Gemische mit 1-Methyl-3,5-diethyl-2,6-diaminobenzol.

Gemäß einer besonders bevorzugten Ausführungsform des erfindungsgemäßen Verfahrens kommen die unter (ii) beispielhaft genannten Diamine, insbesondere die als bevorzugt bzw. besonders bevorzugt bezeichneten Diamine als alleinige Komponente b1) zum Einsatz.

Bei der Komponente b2) handelt es sich um organische Polyhydroxylverbindungen eines aus der Funktionalität und dem Hydroxylgruppengehalt errechenbaren mittleren Molekulargewichts von 1800 bis 12000, vorzugsweise 3000 bis 7000 und einer mittleren Hydroxylfunktionalität von 2 bis 3, vorzugsweise 3. Oftmals werden als Komponente b2) Gemische verschiedener Polyhydroxylverbindungen eingesetzt, wobei es auch denkbar ist, daß einzelne Komponenten derartiger Gemische ein über 400 und unter 1800 liegendes Molekulargewicht und/oder eine über 3 liegende Hydroxylfunktionalität aufweisen.

Geeignete Polyhydroxylverbindungen der genannten Art sind insbesondere die aus der Polyurethanchemie bekannten Polyester- und vorzugsweise Polyetherpolyole, wie sie beispielsweise in US-A-4 218 543, Kolonne 7, Zeile 29 bis Kolonne 8, Zeile 55 beispielhaft genannt sind.

Als Reaktionspartner für die Polyisocyanatkomponente a) dient die "Polyolkomponente" b), die ihrerseits eine Lösung der Kettenverlängerungsmittel b1) in den höhermolekularen Polyhydroxylverbindungen b2) darstellt. Die Komponente b1) wird hierbei in einer Menge von 5 bis 50 Gew.-%, vorzugsweise 8 bis 35 Gew.-%, bezogen auf die Menge der Komponente b2) in dieser gelöst, bzw. mit dieser zu einem bei Raumtemperatur flüssigen Gemisch vereinigt.

Bei der Durchführung des erfindungsgemäßen Verfahrens ist es unerläßlich, als Komponente c) die üblichen Katalysatoren für die Isocyanat-Polyadditionsreaktion mitzuverwenden.

Zu den bevorzugten Katalysatoren gehören die an sich bekannten Zinnkatalysatoren wie z. B. Zinn(II)-salze von Carbonsäuren wie Zinn(II)-acetat, Zinn(II)-octoat, Zinn(II)-ethylhexoat und Zinn(II)-laurat und die Dialkyl-zinnsalze von Carbonsäuren, wie z. B. Dibutyl-zinndiacetat, Dibutyl-zinndilaurat, Dibitylzinn-maleat oder Dioctyl-zinndiacetat allein oder als Komplex mit Amidinen wie 2,3-Dimethyl-3,4,5,6-tetrahydropyrimidin oder 2-Methyl-3-cyclohexyl-3,4,5,6-tetrahydropyrimidin, Aminopyridinen bzw. -pyrimidinen sowie Hydrazinopyridinen bzw. -pyrimidinen. Synergistisch wirkende Katalysatorkombinationen dieser Art werden z.B. in den deutschen Offenlegungsschriften 24 34 185, 26 01 082 und 26 03 834 beschrieben. Als mitzuverwendende Katalysatoren kommen auch tertiäre Amine der an sich bekannten Art in Frage, z. B. Triethylamin, Tributylamin, N-Methylmorpholin, N-Ethyl-morpholin, N-Cocomorphin, N,N-N',N'-Tetramethyl-ethylendiamin, 1,4-Diazabicyclo-(2,2,2)-octan, N-Methyl-N'-dimethyl-aminiothylpiperazin, N-N-Dimethylbenzylamin, Bis-(N,N-dimethylaminoethyl)-adipat, N,N-Diethylbenzylamin, Pentamethyldiethylentriamin, N,N-Dimethylcyclohexylamin, N,N,N',N'-Tetramethyl-1,3-butandiamin, N-N-Dimethyl-β-phenylethylamin, 1,2-Dimethylimidazol und 2-Methylimidazol. Bevorzugter Katalysator dieses Typs ist das 1,4-Diazabicyclo-(2,2,2)-octan Weitere Beispiele von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl Hanser Verlag, München 1966, z. B. auf den Seiten 96 bis 102 beschrieben.

Die Katalysatoren werden in der Regel in einer Menge von 0,001 bis 10, vorzugsweise 0,05 bis 1 Gew.-%, bezogen auf die Menge der Komponente b2) eingesetzt und bei der Durchführung des erfindungsgemäßen Verfahrens vorzugsweise in dieser zusammen mit der Komponente b1) gelöst.

Bei der erfindungswesentlichen Komponente d) handelt es sich um Estergruppen aufweisende Umsetzungsprodukte aus 3 bis 15, vorzugsweise 5 bis 10 Mol Rizinolsäure mit 1 Mol eines ein- oder mehrwertigen Alkohols des Molekulargewichts 32 bis 400, vorzugsweise 62 bis 400 oder mit insgesamt einem Mol eines Gemischs mehrerer derartiger Alkohole. Die Estergruppen aufweisenden Umsetzungsprodukte weisen ein osmometrisch bestimmbares Molekulargewicht von 900 bis 4500, eine Säurezahl von unter 5, vorzugsweise von unter 3 und eine Hydroxylzahl von 12,5 bis 125, vorzugsweise 20 bis 75 auf und stellen im allgemeinen bei 25°C ölige Flüssigkeiten einer Viskosität von 200 bis 3000 mPa.s dar.

Zur Herstellung der erfindungswesentlichen Trennmittel d) können beliebige Alkohole des obengenannten Molekulargewichtsbereichs, d.h. beliebige derartige Alkanole oder Cycloalkanole, die gegebenenfalls Ethergruppen aufweisen, eingesetzt werden. Beispiele sind Methanol, Ethanol, n-Hexanol, n-Dodecanol, n-Octadecanol, die oben unter b1) (i) beispielhaft genannten, gegebenenfalls Ethergruppen aufweisenden Alkandiole, Cyclohexanol, 1,4-Dihydroxycyclohexan, Glycerin oder Trimethylolpropan Beliebige Gemische derartiger Alkohole können ebenfalls eingesetzt werden. Vorzugsweise werden jedoch als Alkoholkomponente bei der Herstellung der Trennmittel gegebenenfalls Ethergruppen aufweisende Alkandiole des Molekulargewichtsbereichs 62 bis 400 der oben unter b1) (i) beispielhaft genannten Art eingesetzt. Besonders bevorzugt werden Ethylenglykol, 1,2- und 1,3-Dihydroxypropan, 1,2-, 1,3-, 1,4- oder 2,3-Dihydroxybutan, Neopentylglykol, 1,4-Bis-hydroxymethylcyclohexan, 1,8-Dihydroxyoctan und ganz besonders bevorzugt 1,6-Dihydroxyhexan als Alkoholkomponente bei der Herstellung der Trennmittel eingesetzt.

Die Herstellung der erfindungswesentlichen Trennmittel d) aus den beispielhaft genannten Ausgangsmaterialien erfolgt durch an sich bekannte Veresterungsreaktionen, beispielsweise durch Erhitzen der Ausgangsmaterialien in Gegenwart von katalytischen Mengen einer Lewis- oder Brönsted-Säure wie z. B. Schwefelsäure, p-Toluolsulfonsäure, sauren Zonenaustauschern, Zinndichlorid oder Titantetrabutylat bei einem Druck von ca. 1000 bis 0,1 mbar auf Temperaturen von bis zu 220°C, vorzugsweise bis zu 180°C unter gleichzeitiger Entfernung des bei der Kondensationsreaktion entstehenden Wassers. Die Herstellung der Trennmittel kann selbstverständlich ebensogut nach dem Azeotrop-Verfahren in Gegenwart eines organischen Lösungsmittels wie z. B. Toluol als Schleppmittel oder nach dem Trägergas-Verfahren, d.h. durch Austreiben des entstehenden Wassers mit einem inerten Gas wie z. B. Stickstoff oder Kohlendioxid erfolgen.

Die erfindungswesentlichen Trennmittel d) können sowohl der Polyisocyanatkomponente a) als auch der Polyolkomponente b) einverleibt werden. Hierbei kann man auch so vorgehen, daß man die Trennmittel der Polyisocyanatkomponente a) bei erhöhten Temperaturen von beispielsweise 30 bis 100°C hinzufügt, so daß die Trennmittel mit einem Teil des Polyisocyanats unter Urethanbildung abreagieren. Da die Hydroxylgruppen aufweisen den Trennmittel ohnehin während der Herstellung der Formkörper mit einem Teil der Polyisocyanatkomponente im Sinne einer Additionsreaktion reagieren und somit letztendlich in dem Formkörper in chemisch eingebauter Form vorliegen, läuft diese zuletzt genannte Variante auf das praktisch gleiche Endergebnis hinaus.

Die erfindungswesentlichen Trennmittel d) werden im allgemeinen in einer Menge von 0,3 bis 30, vorzugsweise 1 bis 10 Gew.-%, bezogen auf das gesamte Reaktionsgemisch, eingesetzt.

Bei der Durchführung des erfindungsgemäßen Verfahrens können gegebenenfalls weitere Hilfs- und Zusatzmittel e) mitverwendet werden. Hierzu gehören beispielsweise:

- Treibmittel wie z. B. Wasser und/oder leicht flüchtige organische Substanzen wie z. B. Aceton, Ethylacetat, Methylenchlorid, Chloroform, Butan oder insbesondere Fluor-Chlor Kohlenwasserstoffe wie Monofluortrichlormethan, Chlordifluormethan und/oder Dichlordifluormethan;

- oberflächenaktive Zusatzstoffe (Emulgatoren und Schaumstabilisatoren) wie z. B. die Natriumsalze von Rizinolsulfonaten oder auch von Fettsäuren oder Salze von Fettsäuren mit Aminen wie ölsaures Diethylamin oder stearinsaures Diethanolamin, Alkali- oder Ammoniumsalze von Sulfonsäuren wie etwa von Dodecylbenzolsulfonsäure oder Dinaphthylmethansulfonsäure oder auch von Fettsäuren wie Rizinolsäure oder von polymeren Fettsäuren oder Schaumstabilisatoren der beispielsweise in US-A-2 764 565 beschriebenen Art;

- Zellregler der an sich bekannten Art wie Paraffine oder Fettalkohole oder Polydimethylpolysiloxane;

- Pigmente, Farbstoffe oder Flammschutzmittel der an sich bekannten Art, ferner Stabilisatoren gegen Alterungs- und Witterungseinflüsse, Weichmacher, fungistatisch oder bakteriostatisch wirkende Substanzen;

- Füllstoffe wie Bariumsulfat, Kieselgur, Ruß, Glasfasern oder Schlämmkreide.

Zu den gegebenenfalls mitzuverwendenden Hilfs- und Zusatzmitteln gehören jedoch auch beispielsweise niedermolekulare, höherfunktionelle Alkohole wie z. B. Glycerin, Trimethylolpropan oder Sorbit, die gegebenenfalls zwecks Erreichens einer evtl. erwünschten Verzweigung der Moleküle zusammen mit den Kettenverlängerungsmitteln b1) mitverwendet werden.

Bei der Durchführung des erfindungsgemäßen Verfahrens wird die Menge der Polyisocyanatkomponente a) vorzugsweise so bemessen, daß im schaumfähigen Gemisch eine Isocyanat-Kennzahl von 70 bis 130, insbesondere 90 bis 110 vorliegt. Unter Isocyanat-Kennzahl versteht man hierbei den Quotienten aus Anzahl der Isocyanatgruppen und Anzahl der gegenüber Isocyanaten reaktiven Gruppen, multipliziert mit 100.

Bei der Durchführung des erfindungsgemäßen Verfahrens wird insbesondere nach der bekannten Reaktionsspritzgußtechnik (RSG- oder RIM-Verfahren) gearbeitet. Die Menge des in die Form eingebrachten, gegebenenfalls schaumfähigen Gemisches wird im übrigen so bemessen, daß der Formkörper eine mittlere Gesamtdichte von 0,8 bis 1,4 g/cm³, vorzugsweise von 0,9 bis 1,2 g/cm³ aufweist. Insbesondere bei der Mitverwendung von mineralischen Füllstoffen können Formkörper mit einer über 1,2 g/cm³ liegenden Dichte resultieren. Die Formkörper können nach einer Formstandzeit von 5 bis 90, - vorzugsweise 20 bis 60 Sekunden entformt werden.

Als Ausgangstemperatur des in die Form eingebrachten Gemisches wird eine Temperatur zwischen 10 und 50°C, vorzugsweise 20 bis 40°C, gewählt. Die Temperatur der Form beträgt 40 bis 100°C, vorzugsweise 50 bis 70°C.

Aufgrund der Mitverwendung der erfindungswesentlichen Trennmittel d) gestattet das erfindungsgemäße Verfahren erstmals die problemlose Serienproduktion von elastomeren, gegebenenfalls mikrozellularen Formkörpern hoher Dichte, ohne daß es erforderlich wäre, die verwendeten Formen in kurzen Zeitabständen zu reinigen. Die ausgezeichneten selbsttrennenden Eigenschaften der erfindungsgemäß erhältlichen Verfahrensprodukte bleiben, wie aus den Ausführungsbeispielen ersichtlich, über mindestens 30 Reaktionszyklen erhalten.

Grundsätzlich ist es selbstverständlich möglich, bei der Durchführung des erfindungsgemäßen Verfahrens neben den erfindungswesentlichen Trennmitteln d) weitere Trennmittel der an sich bekannten Art mitzuverwenden. Hier seien insbesondere die handelsüblichen Metallsalze langkettiger Carbonsäuren, z. B. Zinkstearat, genannt.

Das erfindungsgemäße Verfahren eignet sich insbesondere zur Herstellung von flexiblen Automobilstoßstangen, bzw. von flexiblen Karosserieelementen. Durch geeignete Variation der Ausgangsmaterialien, insbesondere bei geringem Anteil an Diaminkettenverlängerungsmitteln der unter b2) beispielhaft genannten Art können aber auch beispielsweise flexible Schuhsohlen mit gutem Abriebverhalten und ausgezeichneter mechanischer Festigkeit erhalten werden.

In den nachfolgenden Beispielen beziehen sich alle Prozentangaben auf Gewichtsprozente.

A. Herstellung von erfindungsgemäß zu verwendenden Trennmitteln

**Beispiel 1**

In einem 500 l Kessel werden 303 kg Rizinolsäure (1017 Mol), 40 kg 1,6-Dihydroxyhexan (339 Mol) und 2,5 kg p-Toluolsulfonsäure vorgelegt und auf 180°C erhitzt. Das entstehende Wasser wird hierbei innerhalb von 4 h über eine Füllkörperkolonne bei Normaldruck abgenommen. Danach wird der Druck langsam auf 20 mbar reduziert und weiter Reaktionswasser abgenommen. Innerhalb der nächsten 7,5 h destilliert so das gesamte Wasser ab (18,3 kg), welches durch etwas org. Bestandteile verunreinigt ist Man hält den Ansatz noch 1 h bei 20 mbar und kühlt dann ab. Das entstandene, Estergruppen aufweisende Kondensationsprodukt kann als solches als Trennmittel verwendet werden. Es handelt sich um eine Flüssigkeit der Viskosität (25°C) 630 mPa.s, einer Säurezahl von 2,5 und einer Hydroxylzahl von 74. Die Ausbeute liegt bei 321 kg (98 % der Theorie).

**Beispiel 2**

Entsprechend Beispiel 1 werden in einem 500 l Kessel 284 kg (953 Mol) Rizinolsäure, 16 kg (135,6 Mol) 1,6-Dihydroxyhexan und 15 g (50 ppm) Titantetrabutylat umgesetzt. Nach Abdestillation des Wassers erhält man in 98,5 %-iger Ausbeute ein erfindungsgemäß verwendbares Trennmittel mit folgenden Daten:
Säurezahl: 2,0
Hydroxylzahl: 35
Viskosität (25°C): 920 mPa.s

**Beispiel 3**

Entsprechend Beispiel 1 werden 298 kg (1000 Mol) Rizinolsäure, 10 kg (111,1 Mol) 1,4-Dihydroxybutan und 3 kg p-Toluolsulfonsäure umgesetzt und das entstehenden Wasser abdestilliert. Das erhaltene erfindungsgemäß verwendbare Trennmittel fällt in 96 %-iger Ausbeute an und weist folgende Daten auf:
Säurezahl: 3,1
Hydroxylzahl: 28
Viskosität (25°C): 1650 mPa.s

**Beispiel 4**

Entsprechend Beispiel 1 werden 640 g (3,3 Mol) Tetraethylenglykol und 6884 g (23,1 Mol) Rizinolsäure umgesetzt. Die Katalyse erfolgt mit 50 ppm Titantetrabutylat. Innerhalb von 20 h wird das entstehende Reaktionswasser abgenommen. Das resultierende erfindungsgemäß verwendbare Trennmittel fällt in 97 %-iger Ausbeute an und weist folgende Daten auf:
Säurezahl: 2,3
Hydroxylzahl: 30
Viskosität (25°C): 990 mPa.s

**Beispiel 5**

Entsprechend Beispiel 4 werden 11,5 kg eines technischen Polyethylenglykols des mittleren Molekulargewichts 370 mit 64,7 kg Rizinolsäure in Gegenwart von 3 g Titantetrabutylat umgesetzt. Das in 97,5 %-iger Ausbeute anfallende erfindungsgemäß verwendbare Trennmittel weist folgende Daten auf.

Säurezahl: 2,8
Hydroxylzahl: 30,1
Viskosität (25°C): 1010 mPa.s

B. Verwendungsbeispiele

Die Verarbeitung der in den folgenden Verwendungsbeispielen beschriebenen Rezepturen erfolgt mit Hilfe der Reaktionsspritzgußtechnik oder englisch "reaction injection moulding" (RIM).

Polyolgemisch und Polyisocyanat wurden - gegebenenfalls in Abmischung mit dem die Entformung erleichternden Trennmittel - einem Hochdruckdosieraggregat zugeführt und nach intensiver Vermischung in einem zwangsgesteuerten Mischkopf in kürzester Zeit in ein Metallwerkzeug gedrückt.

Das Werkzeug - eine Schüsselform aus Werkzeugstahl - erlaubt die Herstellung eines Formteils der folgenden Abmessungen:

| | |
|---|---|
| Außendurchmesser Boden | 178 mm |
| Außendurchmesser Rand | 186 mm |
| Wandstärke | 4 mm |
| Formteilhöhe | 68 mm |
| Konizität | 3,50 |

Anguß: Quellanguß, mittig am Boden ($\varnothing$ = 10 mm)

Bei Entformung der Schüssel sind an den Wandflächen starke Scherkräfte zu überwinden.

Die Wirksamkeit der inneren Trennmittel wurde bei Entformung von Materialien unterschiedlicher Steifigkeit geprüft (Beispiele 6 bis 8 Biegemodul bei RT ca. 300 MPa, Beispiele 9 bis 11 Biegemodul ca. 175 MPa).

**Beispiel 6** (Vergleich)

77,00 Gew.-Teile eines Polyethers der OH-Zahl 28, der durch Addition von Propylenoxid und anschließende Addition von Ethylenoxid an Trimethylolpropan erhalten wurde (Gewichtsverhältnis PO:EO = 83 : 17),

23,00 Gew.-Teile einer Mischung aus 65 Gew.-Teilen 1-Methyl-3,5-diethylphenylendiamin-(2,4) und 35 Teilen 1-Methyl-3,5-diethylphenylendiamin-(2,6)

0,10 Gew.-Teile Dibutylzinndilaurat und

0,10 Gew.-Teile 1,4-Diazabicyclo-(2.2.2)-octan werden zu einer Polyolkomponente vereinigt und mit 57,00 Gew.-Teilen eines Polyisocyanats verarbeitet, das einen NCO-Gehalt von 24,5 % aufweist und durch Umsetzung eines Gemisches aus a) 90 Gew.-Teilen 4,4'-Diphenylmethandiisocyanat, das 5 bis 10 % 2,4'-Isomeres enthält, und b) 10 Gew.-Teilen oligomerem Polyphenyl-polymethylenpolyisocyanat mit einem technischen Polypropylenglykol des mittleren Molekulargewichts 224 erhalten worden ist.

Die Temperatur der Rohstoffe beträgt 35°C, die Temperatur des Werkzeugs 60°C. Die Formstandzeit wird auf 20 sec und die Taktzeit auf 60 sec eingestellt. Die Werkzeugoberfläche wird vor Herstellung des ersten Formteils mit einem handelsüblichen Trennmittel ([R]Fluoricon 36-134, Hersteller Acmos, Acmos Chemische Fabrik Tietjen & Co. 2800 Bremen 1, Postach 833 behandelt. Es können 8 Formteile entformt werden, weitere Entformungen führen zur Zerstörung des Formteils.

**Beispiel 7** (erfindungsgemäß)

77,00 Gew.-Teile eines Polyethers der OH-Zahl 28 gemäß Beispiel 6,

23,00 Gew.-Teile der Diaminmischung gemäß Beispiel 6,

0,10 Gew.-Teile Dibutylzinndilaurat,

0,10 Gew.-Teile 1,4-Diazabicyclo-(2,2,2)-octan und

7,50 Gew.-Teile des inneren Trennmittels gemäß Beispiel 2 werden zu einer Polyolkomponente vereinigt und mit

1) Acmos Chemische Fabrik Tietjen & Co. 2800 Bremen 1, Postach 833

53,00 Gew.-Teilen des Polyisocyanats aus Beispiel 6 nach dem RSG-Verfahren verarbeitet.

Die Verarbeitungsbedingungen werden wie in Beispiel 6 gewählt.

Es können mühelos 25 Formteile entformt werden, der Aufbau einer störenden Schicht auf der Werkzeugoberfläche wird nicht beobachtet.

**Beispiel 8** (Vergleich)

77,00 Gew.-Teile eines Polyethers der OH-Zahl 28 gemäß Beispiel 6,

23,00 Gew.-Teile des Diamingemischs gemäß Beispiel 6,

0,10 Gew.-Teile Dibutylzinndilaurat

0,10 Gew.-Teile 1,4-Diazabicyclo-(2,2,2)-octan und

7,50 Gew.-Teile eines Esters (DE-A-2 121 670) aus 1 Mol Adipinsäure, 6 Mol Ölsäure und 3 Mol Pentaerythrit (Hydroxylzahl ca. 50) werden zu einer Polyolkomponente vereinigt und mit 53,00 Gew.-Teilen des Polyisocyanats aus Beispiel 6 verarbeitet. Die Verarbeitungsbedingungen werden wie in Beispiel 6 eingestellt.

Es können nur 8 Formteile entformt werden, weitere Entformungen führen zu Zerstörungen des Formteils.

**Beispiel 9** (Vergleich)

81,80 Gew.-Teile eines Polyethers der OH-Zahl 28 gemäß Beispiel 6,

18,00 Gew.-Teile der Diaminmischung gemäß Beispiel 6,

0,10 Gew.-Teile Dibutylzinndilaurat und

0,10 Gew.-Teile 1,4-Diazabicyclo-(2,2,2)-octan werden zu einer Polyolkomponente vereinigt und mit

47,00 Gew.-Teilen eines Umsetzungsproduktes aus Tripropylenglykol und 4,4'-Diphenylmethandiisocyanat (23 Gew.-% NCO) nach dem RSG-Verfahren verarbeitet.

Die Temperatur der Rohstoffe beträgt 35° C, die Temperatur des Werkzeugs 70° C. Die Formstandzeit wird auf 20 sec und die Taktzeit auf 60 sec eingestellt. Die Werkzeugoberfläche wird vor Herstellung des ersten Formteils mit dem Formtrennmittel [R]Chem Trend XMR 136, Chem-Trend International 3205 E. Grand River Howell, Michigan 48843/USA behandelt. Bereits nach 3 Entformungen wurde die Aufreißkraft so hoch, daß weitere Formteile nur unter starker Deformation aus dem Werkzeug entnommen werden konnten.

2) Chem-Trend International 3205 E. Grand River Howell, Michigan 48843/USA

**Beispiel 10** (erfindungsgemäß)

76,10 Gew.-Teile eines Polyethers der OH-Zahl 28 gemäß Beispiel 6,

16,70 Gew.-Teile der Diaminmischung gemäß Beispiel 6,

0,10 Gew.-Teile Dibutylzinndilaurat

0,10 Gew.-Teile 1,4-Diazabicyclo-(2,2,2)-octan und

7,00 Gew.-Teile des Trennmittels gemäß Beispiel 2 werden zu einer Polyolkomponente vereinigt und mit 42,3 Gew.-Teilen eines Umsetzungsproduktes aus Tripropylenglykol und 4,4'-Diphenylmethandiisocyanat (23 % NCO) nach dem RSG-Verfahren verarbeitet.

Die Verarbeitungsbedingungen werden wie in Beispiel 9 gewählt. Es konnten mühelos 30 Entformungen ohne Deformation der Formteile durchgeführt werden.

**Beispiel 11** (Vergleich)

76,10 Gew.-Teile eines Polyethers der OH-Zahl 28 gemäß Beispiel 6,

16,70 Gew.-Teile des Diamingemischs gemäß Beispiel 6,

0,10 Gew.-Teile Dibutylzinndilaurat,

0,10 Gew.-Teile 1,4-Diazabicyclo-(2,2,2)-octan und

7,00 Gew.-Teile des Esters aus Beispiel 8 werden zu einer Polyolkomponente vereinigt und mit 56,00 Gew.-Teilen eines Umsetzungsproduktes aus Tripropylenglykol und 4,4'-Diphenylmethandiisocyanat (23 Gew.-% NCO) nach dem RSG-Verfahren verarbeitet.

Die Verarbeitungsbedingungen werden wie in Beispiel 9 gewählt. Es können nur 5 Entformungen durchgeführt werden, weitere Formteile werden stark deformiert.

**Beispiel 12** (erfindungsgemäß)

77,0 Gew.-Teile des Polyethers der OH-Zahl 28, gemäß Beispiel 6,

23,0 Gew.-Teile der Diaminmischung gemäß Beispiel 6,

0,1 Gew.-Teile Dibutylzinndilaurat,

0,1 Gew.-Teile 1,4-Diazabicyclo-(2,2,2)-octan und

7, 5 Gew.-Teile des Trennmittels gemäß Beispiel 4 werden zu einer Polyolkomponente vereinigt und mit

53,0 Gew.-Teilen des Polyisocyanats gemäß Beispiel 6 nach dem RSG-Verfahren verarbeitet.

Die Verarbeitungsbedingungen werden wie in Beispiel 6 gewählt.

Es können mühelos 20 Formteile entformt werden, ohne daß sich auf der Werkzeugoberfläche eine störende Schicht aufbaut.

**Beispiel 13** (erfingungsgemäß)

77,00 Gew.-Tei eines Polyethers der OH-Zahl 28, der durch Addition von Propylenoxid und anschließende Addition von Ethylenoxid an Trimethylolpropan erhalten wurde (Gewichtsverhältnis PO:EO = 83 : 17)

2,00 Gew.Tei eines Polyethers der OH-Zahl 630, der durch Addition von Propylenoxid an Ethylendiamin erhalten wurde

21,00 Gew.-Tei des Diamingemisches gemäß Beispiel 6

0,10 Gew.-Tei Dibutylzinndilaurat

0,10 Gew.-Tei 1,4-Diazabicyclo-(2,2,2)octan und eine Lösung von 1,5 Gew.-Teilen Zinkstearat in 7,0 Gew.-Tln. des inneren Trennmittels gemäß Beispiel 2 werden zu einer Polyolkomponente vereinigt und mit 53 Gew.-Teilen des Polyisocyanats aus Beispiel 6 nach dem RSG-Verfahren verarbeitet.

Die Temperatur der Rohstoffe beträgt 35˚ C, die Temperatur des Werkzeugs 60° C. Die Formstandzeit wird auf 20 sec. und die Taktzeit auf 60 sec. eingestellt. Die Werkzeugoberfläche wird vor Herstellung des ersten Formteils mit einem handelsüblichen Trennmittel (Frekote[R] X 5, Hersteller Frekote inc. Frekote Inc., 170W Spanish River Blvd. Boca Raton, Fl 33431/USA) behandelt.

Es können mühelos mehr als 50 Formteile entformt werden, der Aufbau einer störenden Schicht auf der Werkzeugoberfläche wird nicht beobachtet.

### Patentansprüche

1. Verfahren zur Herstellung von gegebenenfalls mikrozellularen, elastomeren Formkörpern einer mittleren Dichte von 0,8 bis 1,4 g/cm³ und einer geschlossenen Oberflächenschicht mit selbsttrennenden Eigenschaften durch Umsetzung in geschlossenen Formen eines mittels der Reaktionsspritzgußtechnik hergestellten Reaktionsgemisches aus
   a) organischen Polyisocyanaten und
   b) Lösungen von
   b1) Kettenverlängerungsmitteln, ausgewählt aus der Gruppe bestehend aus (i) gegebenenfalls Ethergruppen aufweisenden Alkandiolen des Molekulargewichtsbereichs 62 bis 400, (ii) aromatischen Diaminen des Molekulargewichtsbereichs 108 bis 400 und (iii) beliebigen Gemischen der unter (i) und (ii) genannten Verbindungen, in
   b2) Polyhydroxylverbindungen eines mittleren Molekulargewichts von 1800 bis 12000 und einer mittleren Hydroxylfunktionalität von 2 bis 3, wobei als Komponente b2) auch Gemische verschiedener Polyhydroxylverbindungen zum Einsatz gelangen können, in denen einzelne Komponenten ein unter 1800, jedoch über 400 liegendes Molekulargewicht und/oder eine über 3 liegende Hydroxylfunktionalität aufweisen können,
   wobei die Menge der Komponente b1) 5 bis 50 Gew.-%, bezogen auf die Menge der Komponente b2), beträgt, unter Mitverwendung von
   c) Katalysatoren für die Isocyanat-Polyadditionsreaktion,
   d) inneren Formtrennmitteln
   und gegebenenfalls
   e) weiteren Hilfs- und Zusatzstoffen,
   dadurch gekennzeichnet, daß man als innere Trennmittel d) Estergruppen aufweisende Kondensationsprodukte eines osmometrisch bestimmbaren mittleren Molekulargewichts von 900 bis 4500, einer Säurezahl von unter 5 und einer Hydroxylzahl von 12,5 bis 125 aus 3 bis 15 Mol Rizinolsäure und einem Mol eines ein- oder mehrwertigen Alkohols des Molekulargewichtsbereichs 32 bis 400 oder insgesamt einem Mol eines Gemischs mehrerer derartiger Alkohole, in einer Menge von 0,3 bis 30 Gew.-% der Kondensationsprodukte, bezogen auf die Gesamtmenge des Reaktionsgemisches, verwendet.

2. Verfahren gemäß Anspruch 1, dadurch gekennzeichnet, daß man als Komponente d) Estergruppen aufweisende Umsetzungsprodukte der Rizinolsäure mit gegebenenfalls Ethergruppen aufweisenden Alkandiolen des Molekulargewichtsbereichs 62 bis 400 verwendet.

### Claims

1. Process for the production of optionally microcellular, elastomeric moulded bodies having an average density of from 0.8 to 1.4 g/cc and a non-cellular surface layer with self separating properties by the reaction, inside closed moulds, of a reaction mixture, produced by the reaction injection moulding technique, of
   a) organic polyisocyanates and
   b) solutions of
   b1) chain lengthening agents selected from (i) alkane diols in the molecular weight range of from 62 to 400 optionally containing ether groups, (ii) aromatic diamines in the molecular weight range of from 108 to 400 and (iii) any mixtures of the compounds mentioned under (i) and (ii) in
   b2) poylydroxyl compounds having an average molecular weight of from 1800 to 12,000 and an average hydroxyl functionality of 2 to 3, in which component b2) there may also be used mixtures of various polyhydroxyl compounds in which individual components may have a molecular weight below 1800 but above 400 and/or a hydroxyl functionality above 3,
   the quantity of component b1) amounting to 5 to 50 % by weight, based on the quantity of component b2), with the addition of
   c) catalysts for the isocyanate polyaddition reaction,
   d) internal mould release agents and optionally
   e) further auxiliary agents and additives,
   characterised in that the substances used as internal mould release agents d) are condensation products containing ester groups and having an average molecular weight, determined osmometrically, of from 900 to 4500, an acid number below 5 and a hydroxyl number of from 12.5 to 125, obtained by the condensation of 3 to 15 mol of ricinoleic acid and 1 mol of a monohydric or polyhydric alcohol in the molecular weight range of from 32 to 400 or a total of 1 mol of a mixture of several such alcohols, in a quantity of from 0.3 to 30 % by weight of the condensation products, based on the total quantity of the reaction mixture.

2. Process according to Claim 1, characterised in that the substances used as component d) are ester groupcontaining reaction products of ricinoleic acid and alkane diols optionally containing ether groups in the molecular weight range of from 62 to 400.

### Revendications

1. Procédé de production de pièces moulees élastomériques éventuellement microcellulaires d'une masse volumique moyenne de 0,8 à 1,4 g/cm³ et à couche de surface fermée, douées de

**0 180 749**

propriétés d'auto-démoulage, par réaction dans des moules fermés d'un mélange réactionnel, produit par la technique de moulage réactif par injection, constitué:

a) de polyisocyanates organiques et

b) de solutions

b1) d'agents d'allongement de chaîne choisis dans le groupe comprenant (i) des alcanediols éventuellement porteurs de groupes éther, de poids moléculaire compris dans l'intervalle de 62 à 400, (ii) des diamines aromatiques de poids moléculaires compris dans l'intervalle de 108 à 400 et (iii) des mélanges quelconques des composés mentionnés en (i) et (ii) dans

b2) des composés polyhydroxyliques de poids moléculaire moyen compris dans l'intervalle de 1800 à 12000 et de fonctionnalité hydroxylique moyenne de 2 à 3, et on peut alors utiliser comme composant b2) également des mélanges de différents composés polyhydroxyliques, dans lesquels des composants individuels peuvent présenter un poids moléculaire inférieur à 1800 mais supérieur à 400 et/ou une fonctionnalité hydroxylique supérieure à 3, la quantité de composant b1) s'élevant à 5 à 50 % en poids par rapport à la quantité de composant b2), en utilisant simultanément

c) des catalyseurs pour la réaction de polyaddition d'isocyanate,

d) des agents internes de démoulage et le cas échéant

e) d'autres adjuvants et additifs, caractérisé en ce qu'on utilise comme agents internes de démoulage d) des produits de condensation, porteurs de groupes ester, de poids moléculaire moyen, déterminable pas osmométrie, de 900 à 4500, d'indice d'acide inférieur à 5 et d'indice d'hydroxyle allant de 12,5 à 125, obtenus à partir de 3 à 15 moles d'acide ricinoléique et d'une mole d'un alcool monovalent ou polyvalent de poids moléculaire compris dans l'intervalle de 32 à 400 ou, au total, d'une mole d'un mélange de plusieurs de ces alcools, en une quantité de 0,3 à 30 % en poids des produits de condensation, par rapport à la quantité totale de mélange réactionnel.

2. Procédé suivant la revendication 1, caractérisé en ce qu'on utilise comme composant d) des produits de réaction, porteurs de groupes ester, de l'acide ricinoléique avec des alcanediols éventuellement porteurs de groupes éther, de poids moléculaire compris dans l'intervalle de 62 à 400.